# FASCICULE DE BREVET EUROPEEN

(11) **EP 1 584 827 B1**
(45) Date de publication et mention de la délivrance du brevet: **04.08.2010**
(21) Numéro de dépôt: 05290734.2
(22) Date de dépôt: 04.04.2005
(51) Int. Cl.: F16C 33/04, F02C 7/06

(54) **Carter de turbomachine comportant des palier lisses pour pivots d'aubes fixes à calage variable**
Gehäuse einer Turbomachine mit Gleitlagern für die Drehzapfen einer verstellbaren Leitschaufelanordnung
Turbomachine casing comprising sliding bearings for pivots of variable vane assembly

(30) Priorité: 05.04.2004 FR 0403536
(43) Date de publication de la demande: 12.10.2005
(73) Titulaire: SNECMA, 75015 Paris (FR)
(72) Inventeur: Foucher, Christelle, 35690 Acigne (FR); Lejars, Claude Robert Louis, 91210 Draveil (FR); Riby, Didier, 77310 Boissise le Roi (FR)
(74) Mandataire: Barbin le Bourhis, Joël

(56) Documents cités:
- EP-A1- 1 197 323
- US-A- 3 764 189
- US-A- 4 410 285
- US-A1- 2002 154 991
- PATENT ABSTRACTS OF JAPAN vol. 0072, no. 91 (M-265), 27 décembre 1983 (1983-12-27) & JP 58 163820 A (DAIDO TOKUSHUKO KK), 28 septembre 1983 (1983-09-28)

## Description

L'Invention concerne un carter de turbomachine équipé de paliers lisses pour le passage de pivots d'aubes fixés à calage variable.

Un tel carter de turbomachine, selon le préambule de la revendication 1, est aussi connu du document US 2002/0154991 A.

Elle concerne plus précisément une douille à base de céramique destinée à être montée dans un orifice traversant ce carter de turbomachine pour réaliser ce palier lisse d'un pivot d'aube à calage variable.

Dans un compresseur de turbomachine, et notamment de turboréacteur, une ou plusieurs couronnes d'aubes redresseuses peuvent être à calage variable, c'est-à-dire que l'angle d'attaque de ces aubes varie en fonction des conditions de vol, sous le contrôle d'un système d'asservissement qui commande la rotation et le déplacement axial d'un anneau relié aux pivots des aubes d'une couronne par des biellettes en fonction de paramètres prédéfinis. Ces variations du calage des aubes, associés aux vibrations du carter, entraînent une usure des pièces en contact. Il a été constaté que l'usure est d'autant plus élevée que les décalages angulaires sont petits, et que la fréquence des vibrations est voisine de 160 hz. L'élément le plus nocif est la pression de matage des pivots qui est préjudiciable à la tenue mécanique des pièces.

Dans le cas d'un système à calage d'aube de turbomachine, Il y a une contrainte particulière qui est la nécessité d'un fonctionnement en milieu non lubrifié. Seule une lubrification sèche peut alors être envisagée pour améliorer les conditions de contact et augmenter la durée de vie des pièces.

Pour répondre à ces besoins, la demanderesse a proposé dans la demande FR 03 00435, déposée le 16 janvier 2003 et non publiée à ce jour, un palier lisse comportant une douille en céramique à l'intérieur de laquelle est disposé un pivot à base de fer, nickel ou cobalt, ou un pivot métallique recouvert d'un frette à base de fer, nickel ou cobalt, les oxydes de fer, nickel ou de cobalt créés lors du contact continu entre le pivot de l'aube et le palier lisse jouant le rôle de lubrifiant.

Par ailleurs, le document US 4,410,285 décrit une bague à manchon intérieur en céramique comportant un manchon intermédiaire.

L'un des facteurs limitant l'utilisation de céramiques comme matériau pour douilles est leur fragilité et leur faible ténacité. Il se produit ainsi des casses de douilles lors du montage sur le carter ou en fonctionnement du fait des coefficients de dilatation différents entre le métal du carter et la céramique et des chocs reçus par les systèmes.

Le but de l'invention est de proposer un carter avec une douille qui pallie les inconvénients mentionnés ci-dessus.

A cet effet, l'invention propose un carter de turbomachine selon la revendication 1.

La chemise métallique rigidifie la douille lors du montage de cette dernière sur le carter, ce qui diminue la casse lors de cette opération. En cas de criques éventuelles de la bague en céramique, les morceaux resteront solidaires de la chemise grâce à la brasure. En outre, la brasure sert d'interface entre deux matériaux ayant une dilatation différente et vient absorber les écarts de dilatation. Ainsi, la liaison céramique/métal est plus souple et la céramique plus résistante.

La bague céramique peut être en une seule pièce et fixée par brasage ou constituée de plusieurs morceaux fixés par brasage.

L'invention concerne également une turbomachine selon la revendication 4.

Dans le cas ou le pivot est en acier ou en titane, ce dernier comporte en outre une bague d'insert constituée d'un matériau métallique à base de fer, nickel ou cobalt et frettée sur le pivot.

D'autres avantages et caractéristiques de l'invention ressortiront à la lecture de la description suivante faite à titre d'exemple et en référence aux dessins annexés, dans lesquels :
- la figure 1 est une demi-vue en coupe d'un stator de compresseur haute pression d'une turbomachine comportant des couronnes d'aubes de redresseurs à calage variable ;
- la figure 2 est une coupe selon un plan axial d'une douille conforme à l'invention ;
- la figure 3 est une première variante de réalisation d'un palier lisse ;
- la figure 4 est une vue à plus grande échelle du palier inférieur de la variante de la figure 3 ;
- la figure 5 est une deuxième variante de réalisation de l'invention ;
- la figure 6 est une vue à plus grande échelle du palier supérieur de la figure 5 ; et
   la figure 7 est une vue à plus grande échelle du palier inférieur de la figure 5.

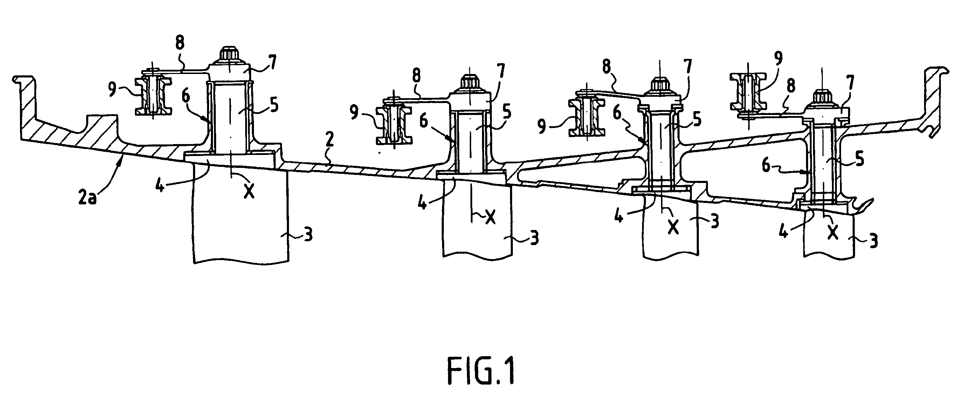

La figure 1 montre un stator de compresseur haute pression d'une turbomachine qui présente un carter extérieur 2 supportant une pluralité de couronnes d'aubes fixes 3 à calage variable.

Les aubes 3 s'étendent radialement à l'intérieur du carter 2 dans la veine du flux gazeux. Elles présentent dans leur région radialement extérieure une platine 4 à pourtour circulaire logeant dans une cavité ménagée sur la face interne 2a du carter 2, et surmontée d'un pivot 5 coaxiale à l'axe X de la platine 4 logeant dans un orifice cylindrique 6 traversant le carter 2. La tête 7 du pivot 5 est équipée d'un bras de manoeuvre 8 relié à un anneau de commande 9.

Chaque couronne d'aubes est associée à un anneau de commande 9. L'actionnement d'un anneau de commande entraîne le pivotement, à l'unisson, de toutes les aubes 3 d'une même couronne.

Chaque pivot 5 est monté dans un orifice 6 avec interposition d'au moins une douille 10 formant un palier lisse.

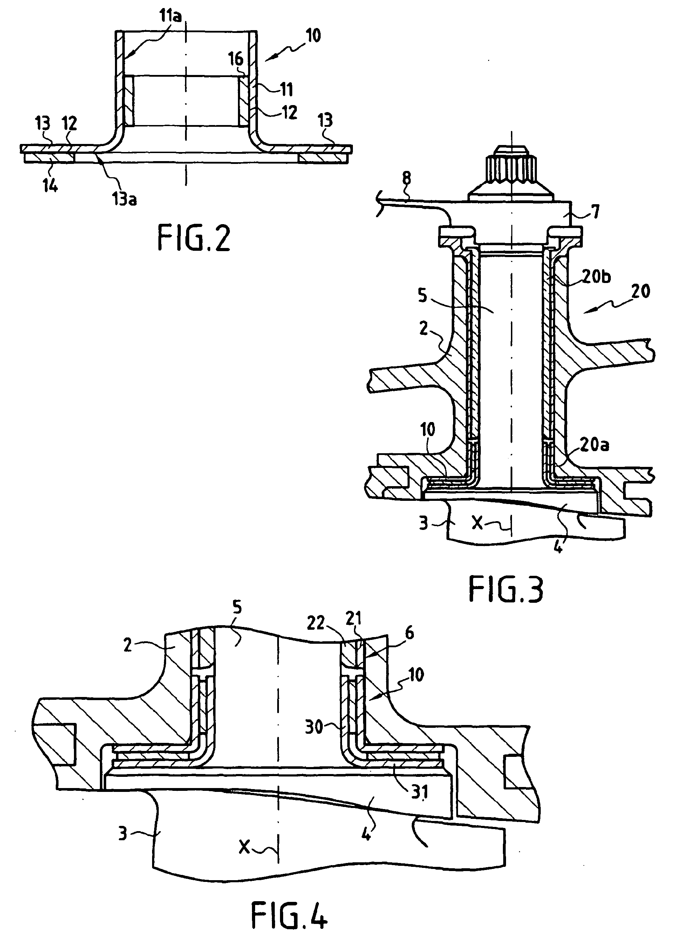

La figure 2 montre une douille 10 conforme à l'invention. Cette douille 10 comporte une chemise métallique 11 dont le diamètre extérieur est sensiblement égal au diamètre de l'orifice 6, et une bague 16 en céramique fixée sur la paroi interne 11a de la chemise 11 par brasage. La référence 12 représente la couche de brasure interposée entre la face externe de la bague 16 en céramique et la paroi interne 11a de la chemise 11.

La céramique de la bague 16 est par exemple de l'alumine. La bague 16 est réalisée par tout procédé connu. Le diamètre de la bague 16 est sensiblement égal et de préférence légèrement inférieur au diamètre intérieur de la chambre 11. Le matériau constitutif de la brasure 12 est choisi parmi les matériaux ou alliages ayant une température de fusion inférieure à la température de fusion du matériau constitutif de la chemise 11 et mouillant naturellement ce matériau ainsi que la céramique. Il est en outre choisi parmi les matériaux très ductiles qui se compriment à froid et se dilatent à chaud afin que la céramique ne soit soumise à aucun effort de traction ou de flexion lors des écarts de températures en fonctionnement du compresseur ou lors du frettage de la douille 10 dans le carter 2 lors du montage.

La couche de brasure 12 recouvrant toute la surface extérieure de la bague 16, l'apparition éventuelle d'une crique en fonctionnement n'est plus critique, tous les morceaux étant retenus par brasage, les différents morceaux de la bague 16 sont maintenue en position dans la chemise 11, en cas de criques. La bague 16 peut être réalisée en plusieurs morceaux qui sont fixés par brasage sur la paroi interne 11a de la chemise 11.

La douille 10 présente avantageusement à l'une de ses extrémités une collerette 13 qui s'étend radialement vers l'extérieur. La face 13a de cette collerette est également équipée par brasage d'une rondelle 14 en céramique qui assure le frottement sec sur la face d'extrémité de la platine 4.

Les figures 3 et 4 montrent un premier mode de réalisation d'un palier lisse 20 pour un pivot 5.

Ce palier 20 comporte un palier inférieur 20a réalisé par une douille 10 conforme à celle décrite ci-dessus, et un palier supérieur 20b constitué d'une chemise 21 entourant un manchon 22 en un matériau à coefficient de frottement plus faible que la céramique, par exemple en polyimide. La douille 10 est située près de la platine 4 de l'aube 3 et correspond au palier le plus chargé. Cette douille permet une reprise d'effort important et une limitation importante des usures du côté le plus chargé du pivot 5. Le palier extérieur 20b limite les efforts du bras de manoeuvre 8 et des vérins actionnant l'anneau de commande 9.

La référence 30 désigne une bague d'insert à base de nickel, cobalt ou fer qui est fretté sur le pivot 5 dans le cas où ce dernier n'est pas constitué par un alliage ayant de bonnes caractéristiques en frottement. Cette bague d'insert 30 comporte avantageusement une collerette 31 sur la face d'extrémité de la platine 4.

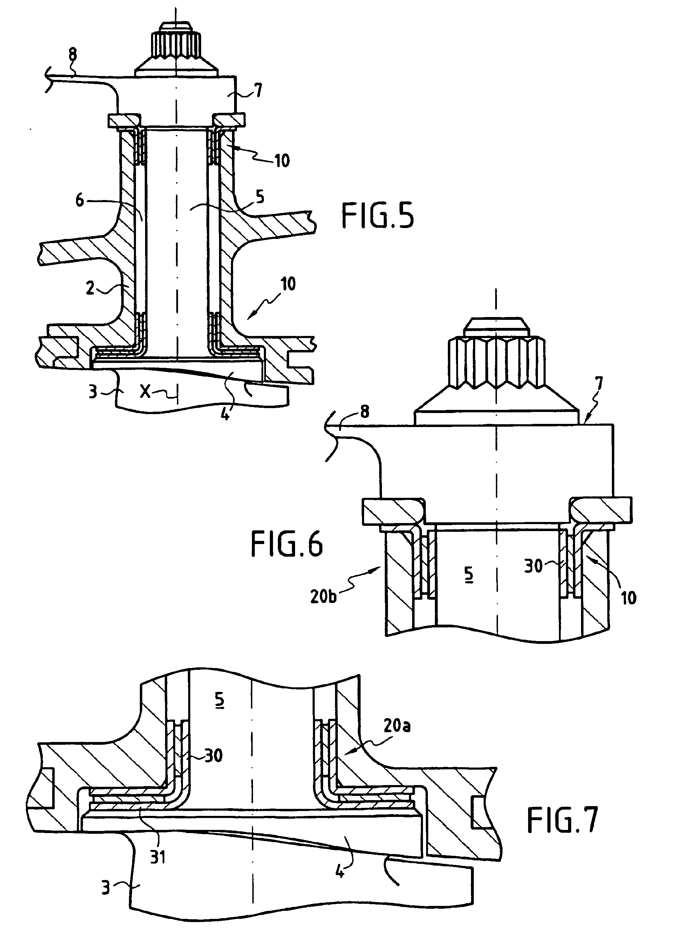

Les figures 5 à 7 montrent un deuxième mode de réalisation d'un palier lisse 20 par un pivot 5, qui présente un palier inférieur 20a et un palier supérieur 20b réalisés avec des douilles 10 conformes à la douille 10 montrée sur la figure 2.

Ces deux douilles 10 permettent une meilleure reprise des efforts et une limitation importante du déversement grâce au très bon comportement anti-usure du palier inférieur 20a et du palier supérieur 20b.

## Revendications

1. Carter de turbomachine comportant au moins un orifice cylindrique (6) formant palier lisse pour le passage d'un pivot (5) d'aube fixe (3) à calage variable, ledit orifice cylindrique étant garni intérieurement d'une douille, **caractérisé en ce que** cette douille est exclusivement constituée des éléments suivants :
- une chemise métallique (11) d'une seule pièce cylindrique présentant à l'une de ses extrémités une collerette (13) qui s'étend radialement vers l'extérieur ;
- une bague (16) en céramique fixée par brasage sur la paroi interne (11a) de ladite chemise (11); et
- une rondelle (14) en céramique fixée par brasage sur la face externe de la collerette (13).

2. Carter de turbomachine selon la revendication 1, **caractérisée par le fait que** la bague en céramique est réalisée en un ou plusieurs morceaux.

3. Carter de turbomachine selon la revendication 1 ou 2, **caractérisée en ce que** ladite douille constitue un palier inférieur (20a) et **en ce que** ledit orifice cylindrique (6) est garni intérieurement d'une autre douille formant palier supérieur (20b) comprenant une chemise métallique extérieure et une bague en céramique fixée par brasage sur la paroi interne de la chemise.

4. Turbomachine, **caractérisée en ce qu'**elle comprend un carter selon l'une des revendications précédentes.

5. Turbomachine selon la revendication 4, **caractérisée en ce que** ledit carter est celui d'un compresseur.

## Claims

1. A casing of a turbomachine comprising at least a cylindrical orifice (6) forming a smooth bearing for a pivot (5) of a variable pitch vane (3), said cylindrical orifice being provided in its inner part with a bushing, **characterized in that** said bushing is exclusively constituted by the following elements:
- a metallic jacket (11) of one cylindrical piece presenting at one of its ends a collar (13) that extends radially outwards,
- a ceramic ring (16) secured to the inside face (11a) of said jacket (11) by brazing; and
- a ceramic washer (14) secured to the outside face of the collar (13)by brazing.

2. A casing of a turbomachine according to claim 1, **characterized in that** the ceramic ring is made of one or more pieces.

3. A casing of a turbomachine according to claim 1 or 2, **characterized in that** said bushing constitutes a bottom bearing (20a) and **in that** said cylindrical orifice (6) is provided in its inner part with another bushing forming an upper bearing (20b) comprising an outer metallic jacket and à ceramic ring secured to the inside face of said jacket by brazing

4. Turbomachine, **characterized in that** is comprises a carter according to any one of the preceding claims.

5. Turbomachine according to claim 4, **characterized in that** said carter is that of a compressor.

## Patentansprüche

1. Gehäuse einer Turbomaschine, umfassend wenigstens eine zylindrische Öffnung (6), die ein Gleitlager für einen Drehzapfen (5) einer verstellbaren Leitschaufel (3) bildet, wobei die zylindrische Öffnung im Inneren mit einer Buchse versehen ist,
**dadurch gekennzeichnet, daß**
die Buchse ausschließlich aus folgenden Elementen besteht:
- einer metallischen Hülse (11) aus einem einzigen zylindrischen Stück, die an einem ihrer Enden einen sich radial nach außen erstreckenden Kragen (13) aufweist,
- einem keramischen Ring (16), der durch Schweißen auf der inneren Wand (11a) der Hülse (11) befestigt ist, und
- einer zylindrischen Scheibe (14), die durch Schweißen auf der äußeren Fläche des Kragens (13) befestigt ist.

2. Gehäuse einer Turbomaschine nach Anspruch 1, **dadurch gekennzeichnet, daß** der keramische Ring aus einem oder mehreren Stücken gefertigt ist.

3. Gehäuse einer Turbomaschine nach Anspruch 1 oder 2, **dadurch gekennzeichnet, daß** die Buchse ein unteres Lager (20a) bildet und daß die zylindrische Öffnung (6) innen mit einer ein oberes Lager (20b) bildenden weiteren Buchse versehen ist, die eine äußere metallische Hülse und einen durch Schweißen auf der inneren Wand der Hülse befestigten keramischen Ring umfaßt.

4. Turbomaschine, **dadurch gekennzeichnet, daß** sie ein Gehäuse nach einem der vorangehenden Ansprüche umfaßt.

5. Turbomaschine nach Anspruch 4, **dadurch gekennzeichnet, daß** das Gehäuse das eines Kompressors ist.
